Europäisches Patentamt

European Patent Office

Office européen des brevets

(19)

(11) Veröffentlichungsnummer: **0 268 697 B1**

(12) **EUROPÄISCHE PATENTSCHRIFT**

(45) Veröffentlichungstag der Patentschrift: **12.06.91**

(51) Int. Cl.⁵: **G05B 13/02**, G05G 15/02

(21) Anmeldenummer: **86116293.1**

(22) Anmeldetag: **24.11.86**

(54) **Verfahren und System zum Verringern von Leistungsspitzen von an Leitungen gebundenen Ver- und/oder Entsorgungsleistungen.**

(43) Veröffentlichungstag der Anmeldung:
**01.06.88 Patentblatt 88/22**

(45) Bekanntmachung des Hinweises auf die
Patenterteilung:
**12.06.91 Patentblatt 91/24**

(84) Benannte Vertragsstaaten:
**AT BE CH DE ES FR GB GR IT LI LU NL SE**

(56) Entgegenhaltungen:
**EP-A- 0 015 120**

**COMPUTER TECHNOLOGY REVIEW, Band 4,
Nr. 3, 1984, Seiten 309-313, Los Angeles, US;
E. CHAFIN "Microprecessors apply real-time
solutions to power plant operation"**

**AUTOMATIK, Band 17, Nr. 6, Juni 1972, Seiten 165-171; E. KOEHLER "Senkung der Energiekosten durch automatische Höchstlastoptimierung"**

**WATER RESOURCES RESEARCH, Band 19,
Nr. 2, April 1983, Seiten 337-345; E. FEINER-
MAN et al.: "Economics of irrigation water
mixing within a farm framework"**

(73) Patentinhaber: **Niedner, Peter, Dr.
Bergerhof
W-8157 Dietramszell(DE)**

(72) Erfinder: **Niedner, Peter, Dr.
Bergerhof
W-8157 Dietramszell(DE)**

(74) Vertreter: **Patentanwälte Grünecker, Kinkeldey, Stockmair & Partner
Maximilianstrasse 58
W-8000 München 22(DE)**

## Beschreibung

Die Erfindung betrifft ein Verfahren zum Verringern von Leistungsspitzen von an Leitungen gebundenen Ver- und Entsorgungsleistungen sowie ein System hierfür.

In aller Regel unterliegt die Inanspruchnahme von leitungsgebundenen Ver- und Entsorgungsleistungen erheblichen Schankungen. Diese Schwankungen sind insbesondere durch die Arbeitszeiten und durch die Jahreszeiten bedingt. So gibt es Schwankungen während eines Tages (8 Stunden Arbeitszeit), während einer Woche (5 Arbeitstage) und während eines Jahres (klimabedingte und andere jahreszeitlich bedingte Einflüsse).

Besonders bei der Versorgung mit elektrischer Energie sind diese Schwankungen sehr störend, weil elektrische Energie praktisch nicht speicherfähig ist. Durch diesen Umstand wird eine ökonomische Erzeugung und Verteilung behindert. Ähnliches - wenn auch nicht mit gleicher wirtschaftlicher Bedeutung - gilt auch für andere leitungsgebundene Ver- und Entsorgungsleistungen.

Die Elektrizitätswirtschaft paßt sich in der Erzeugung den Verbrauchsschwankungen an. Sie betreibt Kraftwerke für
die Grundlast (z.B. Kernenergie, Wasserkraft),
die Mittellast (z.B. Kohlekraftwerke) und
die Spitzenlast (z.B. Gasturbinen, Speicherkraftwerke).

Diese Art der Erzeugung ist kostspielig, da erhebliche Erzeugungs- und Verteilungskapazitäten erstellt und betriebsbereit gehalten werden müssen.

Regional gibt es fast unüberwindliche Hindernisse zur Befriedigung stark schwankender Verbrauchsbedürfnisse und zur Nutzung von zeitgemäßen - nicht-fossilen - Erzeugungsmöglichkeiten. In einigen Regionen beträgt der Anteil an Kraftwerken, die nur Grundlast fahren sollten (Kernkraftwerke, Wasserkraftwerke) 80% und mehr der installierten Erzeugungsleistung statt der benötigten ungefähr 50% - 60%. Ferner gibt es Regionen, in denen witterungsabhängige Energie mit stark schwankendem Aufkommen (z.B., Solar- und Windkraft, Gezeiten- und Wellenkraft) nicht sinnvoll genutzt werden. Der Bau solcher Kraftwerke kann häufig nicht erfolgen, weil es für solch schwankende Erzeugungsmengen keine Verbraucher gibt.

Es hat auch nicht an Versuchen gefehlt, den Stromverbrauch zu vergleichmäßigen. So gibt es Vorrichtungen für
getrennte Tarife für Tag- und Nachtstrom;
Tarife orientiert an den Maximalverbräuchen;
Tarife für den Verbrauch in bestimmten Zeitabschnitten (z.B. 0,5, 1 und 100 Std. Tarife);
jahreszeitlich unterschiedliche Tarife.
Es gibt auch Rundsteueranlagen mit denen Tarife geschaltet oder gezielt besondere Verbraucher (z.B. Nachtspeicheröfen) ein- und ausgeschaltet werden können.

Diese Maßnahmen haben zur weitgehenden Vergleichmäßigung des Stromverbrauchs während eines Tages (Ausfüllen des Nachttals) geführt, konnten aber die Wochen- und Jahresschwankungen nicht beseitigen. Auch führten sie nicht zur Bildung eines Marktpreises für die Dienstleistung elektrische Energie.

Der Erfindung liegt die Aufgabe zugrunde, ein Verfahren und ein System zum Verringern, von Leistungspitzen von an Leitungen gebundenen Ver- und Entsorgungsleistungen anzugeben.

Diese Aufgabe wird im Bezug auf das Verfahren durch die im Anspruch 1 angegebenen Merkmale gelöst.

Die Lösung dieser Aufgabe bezüglich eines Systems ist durch die im Anspruch 12 angegebenen Merkmale gelöst.

Aufgrund der Erfindung ist es erstmals möglich, einen durch Angebot und Nachfrage geregelten Markt auch für Ver- und Entsorgungsleistungen, insbesondere für elektrische Energie zu nutzen.

Wenn im folgenden der Grundgedanke der Erfindung im Rahmen der Versorgung mit elektrischer Energie beschrieben wird, so erfolgt dies beispielhaft und stellt keine Beschränkung auf die Leistung elektrische Energie dar.

Jeder Anbieter von elektrischer Energie bildet zu jeder Zeit seinen momentanen Marktpreis und teilt diesen, d.h. die Kosten für die zur Verfügung gestellte Leistung, seinen Verbrauchern mit. Als Einheit können, z.B. die Kosten pro kWh verwendet werden. Diese Mitteilung kann in Form von Leistungskostensignalen über Rundsteueranlagen, d.h. über das Starkstromnetz oder über getrennte Übertragungswege erfolgen. Im Rahmen der Erfindung kann eine solche getrennte Übertragung mittels elektromagnetischer Wellen, d.h. Funk, eines Nachrichtennetzes, wie z.B. das Telefonnetz oder das Kabelnetz für Rundfunk- und Fernsehen erfolgen. Satelliten können Teil eines solchen Übertragungsweges sein. Auch wäre das Telefonübertragungsnetz TEMEX der Deutschen Bundespost verwendbar.

Die dem Verbraucher zur Verfügung gestellte Preisinformation, also die Information über die Kosten der angebotenen Leistung, kann auf verschiedene Weise genutzt werden.

Für große Stromverbraucher (z.B. bei Haushalten, Waschmaschinen, Trockner, Geschirrspüler und Heizöfen bzw. Heizungsanlagen) sind vorzugsweise programmierbare Steuereinrichtungen vorgesehen, die die jeweiligen Haushaltsgeräte automatisch an- bzw. abschalten. Der Verbraucher kann einen vorbestimmten Leistungskostenwert, d.h. anders ausgedrückt Strompreis, angeben, zu dem z.B. der Geschirrspüler betrieben und zu dem z.B. elektrisch geheizt werden soll.

Weniger bedeutsame Stromverbraucher (Beleuchtung, Küchenmaschinen, Gefriereinrichtungen) können auch durch den Verbraucher per Hand zu- bzw. abgeschaltet werden.

Vorzugsweise sind eine Anzeigeeinrichtung und eine Eingabeeinheit vorgesehen. Auf der Anzeigeeinrichtung kann die Preisinformation sichtbar dargestellt werden. Die Darstellung kann z.B. mit einer elektro-optischen Segmentanzeige erfolgen.

Über die Eingabeeinheit kann der vorbestimmte Leistungskostenwert eingegeben werden, mit dem die vom Anbieter angegebene Preisinformation in der Steuereinrichtung verglichen wird. Ergibt der Vergleich, daß der Strompreis höher liegt als derjenige, zu dem der Verbraucher ein Gerät betreiben will, so wird dieses Gerät nicht eingeschaltet oder gegebenenfalls sofort oder mit Zeitverzug abgeschaltet, wenn das Gerät vorher angeschaltet war.

Vorzugsweise ist die Steuereinrichtung programmierbar ausgebildet und umfaßt eine Speichereinrichtung. Diese Ausgestaltung ermöglicht, daß die Steuereinrichtung verschiedene Funktionen erfüllen kann. Hierzu gehört beispielsweise, daß über einen von dem Verbraucher festzulegenden Zeitraum aufsummiert wird, welche Kosten und/oder Energie für die einzelnen Geräte aufgewandt worden sind. Ferner könnte eine Zeitvorgabe derart festgelegt werden, daß ein Gerät nach Ablauf der vorgegebenen Zeitdauer auch dann eingeschaltet wird, wenn der Strompreis höher als der vom Verbraucher eingegebene Leistungskostenwert ist.

Im Rahmen der Erfindung könnte der von dem Verbraucher über die Eingabeeinheit einzugebende, vorbestimmte Leistungskostenwert auch ein gewisser Geldbetrag sein, der zum Betrieb eines Gerätes zur Verfügung gestellt wird. In der Steuereinrichtung würde dann fortwährend oder jeweils nach Ablauf eines vorbestimmten Zeitintervalls das Produkt aus der von dem Gerät verbrauchten Stromenergie (kWh) und dem Preis (z.B. DM/kWh) gebildet. Dieses Produkt stellt dann jeweils einen Preis in z.B. DM für die verbrauchte elektrische Energie dar. Das betriebene Gerät wird dann abgeschaltet, wenn der Wert dieses Produktes gleich dem oder größer als der vorbestimmte Geldbetrag ist.

Die Steuereinrichtung kann auch so ausgebildet sein, daß für beliebige Zeiträume (Tag, Woche, Monat, Jahr) die Gesamtstromkosten oder auch die einzelnen Kosten für die betriebenen Geräte angezeigt werden können. Es ist auch denkbar, in der Steuereinrichtung die Stromkosten für vergangene Zeiträume zu speichern, so daß es möglich ist, einen Vergleich mit den Verhältnissen in Zeiträumen der Vergangenheit herzustellen.

Eine Optimierung der Kosten kann auf der Verbraucherseite mit Hilfe von Erfahrungswerten erfolgen. Unter Erfahrungswerte sind Werte zu verstehen, die während einer bestimmten Zeitdauer gesammelt wurden und entweder unmittelbar zur Optimierung der Kosten oder als Eingabewerte für zu berechnende neue Werte verwendet werden, die dann zur Kostenoptimierung herangezogen werden.

Beispielsweise könnte jeweils für die einzelnen Wochentage einer gewissen Woche ein Preis- bzw. Leistungskostenprofil mit Hilfe der Steuereinrichtung erstellt werden. Dieses Preisprofil könnte z.B. wöchentlich stets auf den neuesten Stand gebracht werden. Es wäre auch möglich, über einen längeren Zeitabschnitt, z.B. während eines Jahres die wöchentlichen Preisprofile zu erstellen und zu speichern. Damit böte sich die Möglichkeit, eine Prognose für das zu erwartende Preisprofil einer Woche im darauffolgenden Jahr zu treffen. Dies erlaubt jahreszeitlich bedingte Änderungen der Preisprofile zu berücksichtigen. Die erforderliche Zeitinformation (z.B. Beginn eines Tages) könnte vom Anbieter bereitgestellt oder aber auch in der Steuereinrichtung selbsttätig errechnet bzw. bestimmt werden. Der Verbraucher könnte über die Eingabeeinheit ein für die jeweilige Woche geltendes Preisprofil abfragen und auf der Anzeigeeinrichtung ablesen. Wenn z.B. am Mittwoch vormittag mit besonders geringen Preiskosten zu rechnen ist, könnte der Verbraucher bereits am Montag einen entsprechenden Preis für den Betrieb seiner Waschmaschine eingeben, die dann an diesem Tag eingeschaltet wird, wenn elektrische Energie nicht bereits vorher zu dem vorgegebenen Preis angeobten werden sollte.

Mit der in der vorliegenden Beschreibung verwendeten Bezeichnung "Steuereinrichtung" soll eine Einrichtung umfaßt werden, die die von ihr verlangten Funktionen erfüllen kann. Je mehr Funktionen verlangt werden, desto mehr "Intelligenz" muß die Steuereinrichtung selbstverständlich aufweisen. So könnte die Steuereinrichtung einen programmierbaren Mikroprozessor mit Speichern und Schnittstelleneinrichtungen für die Eingabe- und Ausgabeseite aufweisen. Selbstverständlich müssen auch die Eingabeeinheit und die Anzeigeeinrichtung derart ausgebildet sein, daß sie die erwünschte Kommunikation mit der Steuereinrichtung erlauben. So sind eingabeseitig Mittel vorzusehen, die es dem Verbraucher ermöglichen, die für die erwünschte Steuerung benötigten Daten und/oder Befehle einzugeben. Auch die Anzeigeeinrichtung ist derart auszubilden, daß die erwünschte Information dargestellt werden kann. In Abhängigkeit von dem erwünschten Leistungsvermögen der Anzeigeeinrichtung kann diese eine einfache Ziffernanzeige, eine zweidimensionale Anzeige, eine Anzeige auf einem Sichtschirm, eine Anzeige mittels eines Leuchtdiodenfeldes usw. umfassen. Auch ließe sich bei entsprechender Auslegung der Elektronik eine Kopplung mit einem kommerziellen Fernsehgerät herstellen, so daß die gewünschte Anzeige auf diesem erfolgt.

Die Steuereinrichtung, die Eingabeeinheit und die Anzeigeeinrichtung können als Baueinheit ausgebildet sein, die nahe dem Elektrizitätszähler angeordnet ist. Zweckmäßigerweise werden aber die Eingabeeinheit und die Anzeigeeinrichtung an einer Stelle in der Wohnung oder dem Haus des Verbrauchers angeordnet, die leicht zugängig ist.

Zweckmäßigerweise ist die Steuereinrichtung so ausgebildet, daß sie die an installierten Elektrizitätszählern bereits oder zu einem späteren Zeitpunkt zur Verfügung stehende Informationen (z.B. kWh-Verbrauch) erfassen kann.

Im Rahmen der Erfindung ist auch eine Ausgestaltung möglich, die ein Kostenoptimierung auf der Verbraucherseite ermöglicht, wenn dem Verbraucher unterschiedliche leitungsgebundene Leistungen zur Verfügung stehen. Solche unterschiedlichen Leistungen können im Bereich der Energieversorgung Elektrizität, Gas, Heizöl und/oder Fernwärme sein. Die Steuereinrichtung ist dann derart ausgebildet, daß sie die den jeweiligen Energieformen zugeordnete Preisinformation von der Seite des Anbieters erhält. Durch entsprechende Programmierung kann die Steuereinrichtung bestimmen, welche Leistung zur Zeit am kostengünstigsten ist.

Wenn beispielsweise eine Zentralheizungsanlage normalerweise mit Heizöl oder Gas betrieben wird und auch eine elektrische Heizeinrichtung aufweist, dann kann über die Steuereinrichtung die Zentralheizungsanlage von Heizölbetrieb auf elektrischen Betrieb oder umgekehrt geschaltet werden.

Eine Steuerung, die ein solches Umschalten erlaubt, würde ermöglichen, im Sommer die umweltschädliche Verbrennung fossiler Energie einzuschränken und sonst ungenutzte Kern- oder Solarenergie zu nutzen.

Im Rahmen der Erfindung ist auch eine Ausgestaltung möglich, bei der eine vom Verbraucher bereitgestellte Energie bei der Auswahl der zu verwendenden Energie berücksichtigt wird. Wenn z.B. im Falle einer Zentralheizungsanlage der Verbraucher einen Heizöltank mit Heizöl besitzt und die Zentralheizungsanlage wahlweise mit elektrischer Energie, mit Gas oder Heizöl betrieben werden kann, so könnte in Zeiten hoher anbieterseitiger Energiepreise ein Kostenoptimum vorliegen, wenn der Betrieb der Zentralheizungsanlage mit dem Heizöl des Verbrauchers erfolgt. Eine andere verbraucherseitig bereitgestellte Energiequelle kann z.B. ein Notstromdieselaggregat sein.

Im Rahmen der Erfindung kann auch vorgesehen sein, daß nicht nur der Verbraucher Informationen von dem Anbieter erhält, sondern daß auch der Anbieter Informationen von dem Verbraucher erhält. Diese Informationen können auf den gleichen oder unterschiedlichen Übertragungswegen wie die Information für den Verbraucher übertragen werden. Vorzugsweise ist die Steuereinrichtung dann so ausgebildet, daß der Anbieter in der Steuereinrichtung gespeicherte Informationen abrufen kann. Diese Informationen ermöglichen dem Anbieter Kenntnisse über das Verhalten der einzelnen Verbraucher zu erlangen. Der Anbieter wird so über die Verbrauchstendenzen und Gewohnheiten der Verbraucher orientiert und kann z.B. mit einem Trendrechner und/oder einem Prognosegenerator rechtzeitig Maßnahmen vorbereiten, um sich Änderungen des Verbrauchs anzupassen.

Im Rahmen der Erfindung könnte ein solches Informationsaustauschsystem zwischen Anbieter und Verbraucher zu weiteren Dienstleistungen des Anbieters ausgebaut werden.

Solche Dienstleistungen können die Überwachung von Gebäuden im Falle der Abwesenheit der Bewohner (z.B. Ferien) im Hinblick auf Sicherheit gegen Einbruch und auf die technische Funktion (Heizung, Beleuchtung usw.) betreffen. Sie können auch die Steuerung von Haushaltsgeräten (Koch- und Backofen, Lebensmittelvorratsanlage, Warmwasserbereitungseinrichtungen, Schwimmbad, Sauna usw.) umfassen, sowie den Feuerschutz und viele andere Funktionen. Insbesondere kann eine auf der Verbraucherseite vorhandene, witterungsgeführte Heizungs- und/oder Klimaregelung mit meteorologischen Daten, wie z.B. dem ungefähren Verlauf der Außentemperatur während der nächsten 24 Std. versorgt werden. Auch können dem Verbraucher Hinweise zur Nutzung von preisgünstigen Leistungsangeboten und zur Vermeidung von Hochpreisen gegeben werden.

Darüberhinaus ließe sich ein Informationsaustauschsystem zwischen Verbraucher und Anbieter zur Überwachung technischer Einrichtungen und zum Erstellen von Fehlerdiagnosen einsetzen. Im Falle einer Zentralheizungsanlage könnten Fühler vorgesehen sein, die auf gewisse Bestandteile im Rauch der Zentralheizungsanlage ansprechen, wobei die jeweiligen Meßwerte in der betreffenden Steuereinrichtung gespeichert und von dem Anbieter abgefragt werden könnten. Es ließe sich dann feststellen, ob unzulässig hohe Schadstoffmengen abgegeben werden.

Anders als Elektrikzität läßt sich Gas gut speichern. Trotzdem ist der Verbrauch im Winter um vieles höher als im Sommer, so daß trotz aller Speichermöglichkeiten auch hier ein erfindungsgemäßes System, wie im Zusammenhang mit der elektrischen Energieversorgung beschrieben wurde, von Nutzen ist. Als Übertragungsweg für die Preisinformation vom Anbieter zum Verbraucher könnte das Leitungssystem selbst eingesetzt werden, indem die Information über Druckimpulse übertragen wird. Auch andere Übertragungswege, wie vorhergehend im Zusammenhang mit der elektrischen Energieversorgung beschrieben, könnten eingesetzt werden.

Entsprechende Überlegungen gelten auch für die Wasserversorgung. Hier gibt es erhebliche Schwankungen des Verbrauchs während eines Tags, während einer Woche und während eines Jahres. Auch ist Wasser witterungsbedingt nicht immer im gleichen Umfang verfügbar. Insbesondere Großverbraucher, aber auch Haushalte (Rasensprengen während der Nachtzeit) könnten durch ein Optimierungssystem, wie es im Rahmen der Erfindung vorgeschlagen wird, zu wirtschaftlich besseren Verbrauchsgewohnheiten motiviert werden.

Im Bereich der Versorgung mit Fernwärme kann das erfindungsgemäße Verfahren bzw. System zu einer Optimierung der Bereitstellung von elektrischer Energie und Wärmeenergie beim Anbieter beitragen. Eine Optimierung könnte darin bestehen, dem Verbraucher elektrische Energie besonders kostengünstig in Zeiten sehr geringer Beanspruchung des Fernwärmenetzes anzubieten, so daß dieses stillgelegt werden kann.

Die bisherigen Ausführungen beziehen sich in beispielhafter Weise hauptsächlich auf einzelne Haushalte als Verbraucher. Selbstverständlich können die Verbraucher auch Industrie-, Handwerks- und Dienstleistungsbetriebe sein.

Das erfindungsgemäße Verfahren und das erfindungsgemäße System können aber auch dann eingesetzt werden, wenn der Verbraucher ein Verteiler einer leitungsgebundenen Leistung ist. In analoger Weise wie der Verbraucher unter mehreren angebotenen unterschiedlichen, leitungsgebundenen Leistungen die günstigste im Rahmen der Erfindung auswählen kann, so wird der Verteiler einer leitungsgebundenen Leistung unter mehreren gleichen leitungsgebundenen Leistungen die kostengünstigste auswählen und an seine Verbraucher weitergeben. Ein Beispiel hierfür ist die Verteilung elektrischer Energie.

Bisher wurde das erfindungsgemäße Verfahren bzw. erfindungsgemäße System hauptsächlich im Zusammenhang mit leitungsgebundenen Versorgungsleistungen beschrieben. Es ist aber ebenso auf Entsorgungsleistungen anwendbar. Eine Entsorgungsleistung ist z.B. die Aufnahme bzw. Abnahme von Abwässern. Das erfindungsgemäße Verfahren bzw. System könnte dazu eingesetzt werden, periodische Überlastungen bei Kläranlagen zu verhindern, so daß dadurch die Reinigungs- und Klärleistung verbessert werden kann.

Erfindungsgemäß können die von dem Anbieter abgegebenen Informationen einem einzelnen Verbraucher oder einer bestimmten Verbrauchergruppe zugeordnete Codierungen enthalten. Auf der Seite der Verbraucher wird die Codierung mit einem Bezugscode verglichen. Die Empfängereinrichtung könnte eine Prüfeinrichtung aufweisen, um diesen Vergleich durchzuführen. Die Information von dem Anbieter gelangt nur dann zu der Steuereinrichtung, wenn dessen Codierung mit dem Bezugscode übereinstimmt. Eine solche Ausgestaltung ermöglicht, für unterschiedliche Verbraucher wie z.B. Gewerbetreibende und Privathaushalte die jeweiligen Leistungen zu unterschiedlichen Preisen anzubieten.

Von der Erfindung soll auch umfaßt werden, daß verbraucherseitig Informationen bereitgestellt werden können, die Aussagen über das Verbrauchsverhalten ermöglichen. Der Anbieter könnte aufgrund dieser Informationen über das Verbrauchsverhalten wiederum sein eigenes Angebotsverhalten darauf abstimmen. Der Anbieter erhält somit die Möglichkeit, seine Preispolitik nach dem Verbrauchsverhalten auszurichten oder aber auch durch seine Preispolitik das Verbrauchsverhalten zu beeinflussen. Ferner wäre es dem Anbieter möglich auf seiner Seite eine Optimierung der Kosten bzw. des Gewinnes auf Grundlage der Informationen des Verbrauchsverhaltens zu erzielen. Auch auf der Anbieterseite könnten Erfahrungswerte gesammelt werden und für die Ausgestaltung der Preispolitik und/oder der genannten Optimierung dienen.

Die Erfindung wird im folgenden anhand von Ausführungsbeispielen unter Bezugnahme auf die Zeichnung näher erläutert. Es zeigt:

Fig. 1   eine schematische Blockdarstellung einer Ausführungsform nach der Erfindung im Falle eines einzigen Verbrauchers der an eine elektrische Versorgungsleitung angeschlossen ist, und

Fig. 2   eine schematische Blockdarstellung einer anderen Ausführungsform nach der Erfindung für den Fall eines einzigen Verbrauchers, der an mehrere, unterschiedliche Energieversorgungsleitungen angeschlossen ist.

Über eine Leitung 1 wird von einem Anbieter dem Verbraucher elektrische Energie zugeführt. Über die Leitung 1 werden dem Verbraucher Leistungskostensignale von dem Anbieter zugeführt, die eine Information über den momentanen Preis der elektrischen Eneregie enthalten. Ein mit 2 bezeichneter Zähler und Signalempfänger dient dazu, einerseits die vom Verbraucher verbrauchte elektrische Energie zu messen und andererseits die vom Anbieter abgegebenen Leistungskostensignale zu empfangen. Die Leistungkostensignale werden einer Steuereinrichtung 3 zugeführt. Die Steuereinrichtung 3 ist mit einer Eingabe- und Anzeigeeinheit 5 über einen Informationsübertragungsweg 4 verbunden. Auf der Anzeigeeinheit werden die von dem Anbieter erhaltenen Preisinformationen angezeigt. Der Verbraucher kann über die Eingabeeinheit Daten eingeben, die über den Informationsübertragungsweg 4 zu der Steuereinrichtung 3 gelangen.

Mit elektrischer Energie betriebene Haushaltsgeräte 7, 8 und 9 sind jeweils über eine eigene Leitung mit der Steuereinrichtung 3 verbunden. Diese Leitungen sind allgemein mit 6 bezeichnet.

Von dem Verbraucher zu dem Anbieter ist eine Informationsübertragungsleitung 10 vorgesehen, die dazu dient, von der Steuereinrichtung 3 verbraucherseitige Informationen zu dem Anbieter zu übertragen. Es ist nicht unbedingt erforderlich, eine getrennte Informationsübertragungsleitung 10 vorzusehen, sondern erfindungsgemäß können die Informationen von dem Verbraucher auch über die elektrische Versorgungsleitung 1 zu dem Anbieter übertragen werden.

Die Steuereinrichtung 2 ist auch mit Fühlern 11 und 12 verbunden, die z.B. als Temperaturfühler Information zur Steuerung einer Heizungsanlage liefern. Solche Fühler könnten auch dazu dienen, Informationen von der Verbraucherseite für den Anbieter zur Verfügung zu stellen.

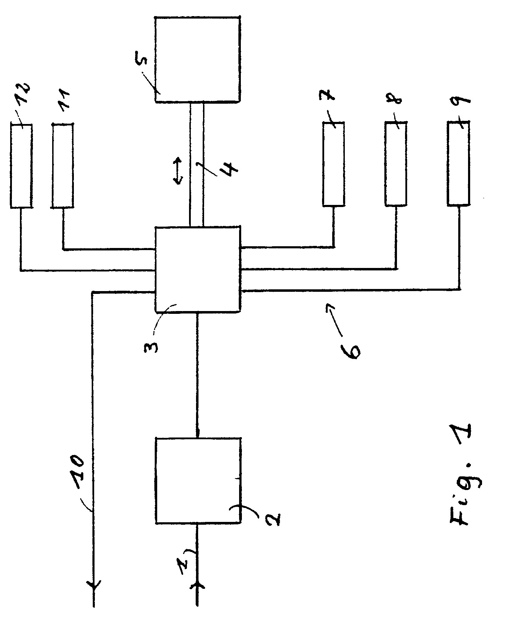

Im folgenden wird die Arbeitsweise der Ausführungsform gemäß Fig. 1 beschrieben. Der Verbraucher kann auf der Anzeigeeinheit 5 die von dem Anbieter über die Versorgungsleitung 1 erhaltenen Informationen ablesen. Es sei angenommen, daß es sich bei dieser Information um den Preis für ein kWh handelt.

Der Verbraucher gibt über die Eingabeeinheit den Preis pro kWh ein, der beim Betrieb eines Gerätes nicht überschritten werden soll. Ferner gibt der Verbraucher ein, welches Gerät angeschaltet werden soll, wenn der Preis pro kWh nicht höher als der von dem Verbraucher eingegebene Wert liegt. Die von dem Verbraucher eingegebenen Werte gelangen über den Informationsübertragungsweg 4 zu der Steuereinrichtung 3. In der Steuereinrichtung 3 wird der verbraucherseitig eingegebene Kostenwert pro kW mit der von dem Anbieter erhaltenen Preisinformation verglichen. Sind die Kosten pro kWh kleiner als der oder gleich dem von dem Verbraucher eingegebenen Kostenwert, so wird das von dem Verbraucher angegebene Gerät angeschaltet. Dieses Gerät wird dann abgeschaltet, wenn die Kosten für eine kWh größer als der von dem Verbraucher angegebene Wert ist oder aber wenn das Gerät seinen Betriebsablauf beendet hat.

Wenn die Kosten für eine kWh höher als der von dem Verbraucher angegebene Wert ist, wird das betreffende Gerät nicht angeschaltet.

Die Steuereinrichtung kann auch so ausgebildet sein, daß sie einen programmierbaren Mikroprozessor enthält, dem über die Eingabeeinheit 5 verschiedene Befehle zugeführt werden können. So könnte beispielsweise eine Zeitdauer eingegeben werden, nach deren Ablauf das betreffende Gerät auch dann angeschaltet wird, wenn die Kosten pro kWh höher als der von dem Verbraucher angegebene Kostenwert sind. Eine solche Maßnahme ist zum Beispiel zweckmäßig, wenn eine Geschirrspülmaschine zu einem vorbestimmten Zeitpunkt ihren Betrieb beendet haben soll.

In der Steuereinrichtung 3 kann der jeweils vorliegende Zählerstand des die verbrauchte elektrische Energie messenden Zählers gespeichert werden. Eine Information über den Wert des Zählerstandes kann über die Informationsübertragungsleitung 10 zu dem Anbieter übertragen werden. Es ist auch möglich, die Steuereinrichtung so auszugestalten, daß der Wert des in der Steuereinrichtung gespeicherten Zählerstandes von dem Anbieter im Rahmen einer Fernauslese ausgelesen werden kann. Andere Informationen könnten auch in der Steuereinrichtung gespeichert und zur Übertragung zu dem Anbieter oder zum Auslesen durch den Anbieter bereitgestellt werden. Solche Informationen könnten z.B. das Verbrauchsverhalten des Verbrauchers umfassen. Beispielsweise könnte ein Verbrauchs-Zeitprofil über das tägliohe oder wöchentliche Verbrauchsverhalten erstellt werden. Längere oder kürzere Zeiträume sind selbstverständlich auch denkbar.

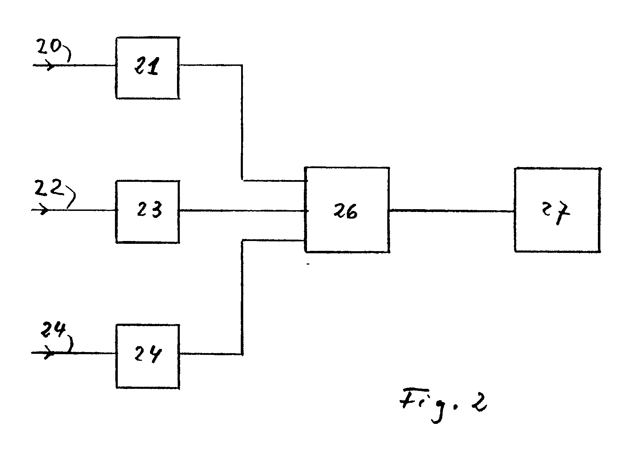

Fig. 2 zeigt schematisch eine Ausführungsform für den Fall, bei dem der Verbraucher an drei verschiedene Energieversorgungsleitungen 20, 22, 24 angeschlossen ist. Zähler- und Signalempfängereinrichtungen 21,23 bzw. 25 sind in den jeweiligen Versorgungsleitungen angeordnet. Diese Zähler- und Empfängereinrichtungen zählen einerseits den Verbrauch der in Anspruch genommenen Energiemenge und andererseits erhalten sie die Leistungskostensignale von der Anbieterseite, welche eine Information über den Energiepreis enthalten. Diese Signale werden einer Steuereinrichtung 26 zugeführt. Die Steuereinrichtung ist so ausgelegt, daß sie ermitteln kann, welche der angebotenen Energien am kostengünstigsten ist. Mit der Steuereinrichtung 26 ist eine Vorrichtung verbunden, die betrieben werden soll. Durch die Steuereinrichtung 26 werden im einzelnen nicht dargestellte Ventile bzw. Schalter derart betätigt, daß dem Gerät 27 diejenige Energieform zugeführt wird, die als am preisgünstigsten festgestellt worden ist.

Wenn beispielsweise das verbraucherseitige Gerät 27 eine Zentralheizungsanlage ist, die mit unterschiedlichen Energieformen betrieben werden kann, so könnte die Versorgungsleitung 20 für elektrische Energie, die Versorgungsleitung 22 für Gas und die Versorgungsleitung 24 für Heizöl vorgesehen sein. Die Steuereinrichtung 26 stellt fest, welche Energieform am preisgünstigsten ist und betätigt nicht-dargestellte Ventile derart, daß z.B. eine Verbindung zwischen der Versorgungsleitung 22 für Gas und der Zentralheizungsanlage hergestellt wird, wenn Gas als die preisgünstigste Energieform festgestellt wurde.

Auch bei der in Fig. 2 dargestellten Ausführungsform könnte die Steuereinrichtung 26 mit einer Eingabeeinheit und Anzeigeeinrichtung verbunden sein, wie es bei der Ausführungsform gemäß Fig. 1 der Fall ist. Die Steuereinrichtung könnte ebenfalls wie bei dem Ausführungsbeispiel gemäß Fig. 1 einen programmierbaren Mikroprozessor umfassen. Dieser könnte so programmiert sein, daß nicht nur die preisgünstigste Energieform bestimmt wird, sondern daß auch der Preis der preisgünstigsten Energieform mit einem von dem Verbraucher vorbestimmten Preis verglichen wird und aufgrund des Vergleichsergebnisses eine entsprechende Entscheidung getroffen wird, ob das Gerät wie z.B die Heizungsanlage angeschaltet werden soll oder nicht.

Bei den in den Fig. 1 und 2 dargestellten Ausführungsbeispielen sind der Zähler und die Empfängereinrichtung als eine Einheit dargestellt. Dies ist aber keine Notwendigkeit, da die Empfängereinrichtung auch als eine getrennte Einheit oder mit der Steuereinrichtung zusammen als eine gemeinsame Einheit ausgebildet sein kann. Da die Zähler Eichvorschriften unterliegen und im allgemeinen verblombt sind, bietet die Möglichkeit, die Empfängereinrichtungen unabhängig von den Zählern auszubilden, daß die zur Durchführung der Erfindung erforderlichen Maßnahmen (z.B. Herstellen der elektrischen Anschlußverbindungen) von üblichen Elektroinstallationsbetrieben durchgeführt werden können. Die hier angesprochene Trennung zwischen Zähler und Empfängereinrichtung im Falle der elektrischen Energie gilt selbstverständlich auch für andere leitungsgebundene Leistungen, wie z.B. Fernwärme und brennbares Gas.

Die Erfindung wurde im Rahmen von Ausführungsbeispielen beschrieben. Diese Beschreibung soll aber keine Einschränkung der Erfindung darstellen, sondern der Erläuterung der Erfindung dienen.

## Ansprüche

1. Verfahren zum Verringern von Leistungsspitzen von an Leitungen gebundenen Ver- und/oder Entsorgungsleistungen, **dadurch gekennzeichnet,** daß

auf der Seite des Anbieters einer Leistung ein die momentanen Kosten der jeweiligen Leistung angebendes Leistungskostensignal abgegeben wird,

auf der Seite des Verbrauchers dieses Leistungskostensignal empfangen und mit einem vorbestimmten Leistungskostenwert verglichen wird und in Abhängigkeit von dem Vergleichsergebnis eine Verbindung mit der Leitung für diese Leistung hergestellt, aufrechterhalten, unterbrochen oder unterbrochen gehalten wird.

2. Verfahren nach Anspruch 1, **dadurch gekennzeichnet,** daß der Verbraucher über mindestens zwei Leitungen für unterschiedliche Leistungen versorgt bzw. entsorgt werden kann, daß aus den empfangenen Leistungskostensignalen, die gleichartigen Leistungen zugeordnet sind, das Leistungskostensignal, das der kostengünstigsten Leistung entspricht, ausgewählt und mit dem vorbestimmten Leistungskostenwert verglichen wird.

3. Verfahren nach Anspruch 1 oder 2, **dadurch gekennzeichnet,** daß der Verbraucher eine leitungsgebundene Leistung bereitgestellt hält, der ein Leistungskostenwert zugeordnet ist, welcher mit dem Leistungskostensignal oder den Leistungskostensignalen einer gleichartigen Leistung des Anbieters verglichen wird, und daß in Abhängigkeit von dem Vergleichsergebnis eine Verbindung mit der Leitung für die verbraucherseitig bereitgestellte Leistung hergestellt, aufrechterhalten, unterbrochen oder unterbrochen gehalten wird.

4. Verfahren nach einem der Ansprüche 1 bis 3, **dadurch gekennzeichnet,** daß das Leistungskostensignal mit einer Kodeinformation versehen wird, die wenigstens einer von einer Anzahl von Verbrauchergruppen zugeordnet ist, und daß das Leistungskostensignal nur bei den Verbrauchern der jeweiligen Verbrauchergruppe, der die Kodeinformation zugeordnet ist, mit dem vorbestimmten Leistungskostenwert verglichen wird.

5. Verfahren nach einem der Ansprüche 1 bis 4, **dadurch gekennzeichnet,** daß als Übertragungsweg zur Signalübertragung zwischen Anbieter und Verbraucher die Leitung für die jeweilige Leistung verwendet wird.

6. Verfahren nach einem der Ansprüche 1 bis 4, **dadurch gekennzeichnet,** daß zur Signalübertragung zwischen Anbieter und Verbraucher ein von der Leitung für die Leistung unabhängiger Übertragungsweg verwendet wird.

7. Verfahren nach Anspruch 5 oder 6, **dadurch gekennzeichnet,** daß auf einem der Übertragungswege Signale von dem Verbraucher zu dem Anbieter übertragen werden.

8. Verfahren nach Anspruch 7, **dadurch gekennzeichnet,** daß verbraucherseitig Informationen über den Verbrauch, die Menge und/oder Art der verbrauchten Leistung bereitgestellt werden und als Informationssignale zu dem Anbieter übertragen werden.

9. Verfahren nach Anspruch 8, **dadurch gekennzeichnet,** daß die Informationssignale von dem Anbieter abgerufen werden.

10. Verfahren nach einem der Ansprüche 1 bis 4, **dadurch gekennzeichnet,** daß die dem jeweiligen Leistungskostensignal zugeordneten Kosten sichtbar angezeigt werden.

11. Verfahren nach einem der Ansprüche 1 bis 9, **dadurch gekennzeichnet,** daß die Leistung mindestens eine Leistung aus der elektrische Energie, Fernwärme, brennbares Gas, Heizöl, Wasser, Abwasser, Abfall und Industrieprodukte umfassenden Gruppe ist.

12. System zum Verringern von Leistungsspitzen von an Leitungen gebundenen Ver- und/oder Entsorgungsleistungen, **gekennzeichnet durch**

auf der Seite des Anbieters der Leistung eine Sendereinrichtung zur Abgabe von die momentanen Leistungskosten angebenden Leistungskostensignalen,

auf der Seite des Verbrauchers eine Empfängereinrichtung (2) für die Leistungskostensignale und eine Steuereinrichtung (3), wobei die von der Empfängereinrichtung (2) empfangenen Leistungskostensignale in der Steuereinrichtung (3) mit einem vorbestimmten Leistungskostenwert verglichen werden und in Abhängigkeit von dem Vergleichsergebnis eine Verbindung mit der Leitung (1) für diese Leistung herstellbar, aufrechterhaltbar, unterbrechbar oder unterbrochen haltbar ist.

13. System nach Anspruch 12, **dadurch gekennzeichnet,** daß der Verbraucher über mindestens zwei Leitungen (20, 22, 24) auf der Anbieterseite angeschlossen ist, daß die Steuereinrichtung (26) eine logische Einrichtung enthält, mit der aus den empfangenen Leistungskostensignalen, die gleichartigen Leistungen zugeordnet sind, das der kostengünstigsten Leistung entsprechende Leistungskostensignal ausgewählt und mit dem vorbestimmten Leistungskostenwert verglichen wird.

14. System nach Anspruch 12 oder 13, **dadurch gekennzeichnet,** daß verbraucherseitig eine leitungsgebundene Leistung vorgesehen ist, der ein Leistungskostenwert zugeordnet ist, daß dieser Leistungskostenwert in der Steuereinrichtung mit dem Leistungskostensignal bzw. den Leistungskostensignalen verglichen wird, und daß in Abhängigkeit von dem Vergleichsergebnis eine Verbindung mit der Leitung der verbraucherseitig vorgesehenen Leistung herstellbar, aufrechterhaltbar, unterbrechbar oder unterbrochen haltbar ist.

15. System nach einem der Ansprüche 12 bis 14, **dadurch gekennzeichnet,** daß das Leistungskostensignal eine Kodeinformation enthält, die wenigstens einer von einer Anzahl von Verbrauchergruppen zugeordnet ist, daß die Empfängereinrichtung eine Prüfeinrichtung enthält, in der die Kodeinformation des Leistungskostensignals mit einer vorbestimmten Kodeinformation verglichen wird, und daß das Leistungskostensignal nur dann mit dem Leistungskostenwert verglichen wird, wenn beide Kodeinformationen übereinstimmen.

16. System nach einem der Ansprüche 12 bis 15, **dadurch gekennzeichnet,** daß die Leistungskostensignale von dem Anbieter zu dem Verbraucher über die Leitung für die jeweilige Leistung übertragen werden.

17. System nach einem der Ansprüche 12 bis 15, **dadurch gekennzeichnet,** daß die Leistungskostensignale von dem Anbieter zu dem Verbraucher über einen von der Leitung für die Leistung unabhängigen Übertragungsweg übertragen werden.

18. System nach Anspruch 16 oder 17, **dadurch gekennzeichnet,** daß Signale von dem Verbraucher zu dem Anbieter über die Leitung für die jeweilige Leistung und/oder über einen von der Leitung unabhängigen Übertragungsweg übertragen werden.

19. System nach Anspruch 18, **dadurch gekennzeichnet,** daß verbraucherseitig Informationen über den Verbrauch, die Menge und/oder Art der verbrauchten Leistung bereitstellbar und als Informationssignale zu dem Anbieter übertragen werden.

20. System nach Anspruch 19, **dadurch gekennzeichnet,** daß die Informationssignale von dem Anbieter abgerufen werden.

21. System nach einem der Ansprüche 12 bis 15, **dadurch gekennzeichnet,** daß die den Leistungskostensignalen zugeordneten Kosten mittels einer Anzeigeeinheit sichtbar anzeigbar sind und daß der vorbestimmte Leistungskostenwert über eine Eingabeeinheit eingegeben wird.

22. System nach einem der Ansprüche 12 bis 20, **dadurch gekennzeichnet,** daß die Leistung mindestens eine Leistung aus der elektrische Energie, Fernwärme, brennbares Gas, Heizöl, Wasser, Abwasser, Abfall und Industrieprodukte umfassenden Gruppe ist.

## Claims

1. A method of reducing peaks in supply and/or disposal services tied to pipelines, cables or other lines, characterised in that a service cost signal indicating the instantaneous costs of the specific service is delivered at the service supplier's end, said service cost signal is received and compared with a predetermined service cost value at the user's end and, depending upon the result of the comparison, a connection to the line for this service is made, maintained, interrupted or kept interrupted.

2. A method according to claim 1, characterised in that a supply or disposal service can be provided to the user over at least two lines for different services, in that the service cost signal corresponding to the most economic service is selected from the received service cost signals associated with services of the same kind, and is compared with the predetermined service cost value.

3. A method according to claim 1 or 2, characterised in that the user holds on stand-by a line-tied service associated with a service cost value, which is compared with the service cost signal or service cost signals of a supplier's service of the same kind, and in that depending upon the result of the comparison a connection to the line for the service held on stand-by at the user's end is made, maintained, interrupted or kept interrupted.

4. A method according to any one of claims 1 to 3, characterised in that the service cost signal is provided with a code information associated with at least one of a number of user groups, and in that the service cost signal is compared with the predetermined service cost value only at users of the specific user group associated with said code information.

5. A method according to any one of claims 1 to 4, characterised in that the line for the associated service is used as the transmission path for signal transmission between the supplier and the user.

6. A method according to any one of claims 1 to 4, characterised in that a transmission path independent of the line for the service is used for signal transmission between the supplier and user.

7. A method according to claim 5 or 6, characterised in that signals are transmitted from the user to the supplier over one of the transmission paths.

8. A method according to claim 7, characterised in that information as to the use, quantity and/or type of service used is prepared at the user's end and is transmitted as information signals to the supplier.

9. A method according to claim 8, characterised in that the information signals are called up by the supplier.

10. A method according to any one of claims 1 to 4, characterised in that the costs associated with the specific service cost signal are displayed visually.

11. A method according to any one of claims 1 to 9, characterised in that the service is at least one service from the group comprising electric power, district heating, combustible gas, fuel oil, water, waste water, effluent and industrial products.

12. A system for reducing peaks in supply and/or disposal services tied to pipelines, cables or other lines, characterised by a transmission means at the service supplier's end for delivering service cost signals indicating the instantaneous service costs, a receiving means (2) at the user's end for the service cost signals and a control means (3), the service cost signals which are received by the receiving means (2) being compared, in the control means (3), with a predetermined service cost value and, depending upon the result of the comparison, a connection to the line (1) for said service being adapted to be made, maintained, interrupted or kept interrupted.

13. A system according to claim 12, characterised in that the user is connected to the supplier's end via at least two lines (20, 22, 24), in that the control means (26) contains a logic means whereby the service cost signal corresponding to most economic service is selected from the received service cost signals associated with services of the same kind, and is compared with the predetermined service cost value.

14. A system according to claim 12 or 13, characterised in that a line-tied service associated with a service cost value is provided at the user's end, in that said service cost value is compared, in the control means, with the service cost signal or service cost signals, and in that, depending upon the result of the comparison, a connection to the line of the service at the user's end can be made, maintained, interrupted or kept interrupted.

15. A system according to any one of claims 12 to 14, characterised in that the service cost signal contains a code information which is associated with at least one of a number of user groups, in that the receiving means contains a test means in which the code information of the service cost signal is compared with a predetermined code information, and in that the service cost signal is compared with the service cost value only when both sets of code information agree.

16. A system according to any one of claims 12 to 15, characterised in that the service cost signals are transmitted from the supplier to the user via the line for the specific service.

17. A system according to any one of claims 12 to 15, characterised in that the service cost signals are transmitted from the supplier to the user via a transmission path independent of the line for the service.

18. A system according to claim 16 or 17, characterised in that signals are transmitted from the user to the supplier via the line for the specific service and/or via a transmission path independent of said line.

19. A system according to claim 18, characterised in that information as to the use, quantity and/or type of service used is adapted to be prepared at the user's end and is transmitted as information signals to the supplier.

20. A system according to claim 18, characterised in that the information signals are called up by the supplier.

21. A system according to any one of claims 12 to 15, characterised in that the costs associated with the service cost signals can be visually displayed by means of a display unit and in that the predetermined service cost value is input via an inputting unit.

22. A system according to any one of claims 12 to 20, characterised in that the service is at least one service from the group comprising electric power, district heating, combustible gas, fuel oil, water, waste water, effluent and industrial products.

**Revendications**

1. Procédé pour la réduction de pointes de débit pour des fournitures de distribution et/ou d'évacuation dépendantes de conduites, caractérisé en ce que :

   du côté de l'offreur d'une fourniture est délivré un signal de coût de fourniture indiquant le coût instantané de cette fourniture,

   du côté du consommateur ce signal de coût de fourniture est reçu et comparé à une valeur de coût de fourniture prédéterminée et en fonction du résultat de la comparaison un raccordement à la conduite pour cette fourniture est établi, maintenu, interrompu ou maintenu interrompu.

2. Procédé selon la revendication 1, caractérisé en ce que le consommateur peut être alimenté ou déchargé par l'intermédiaire d'au moins deux conduites pour des fournitures différentes, que parmi les signaux de coût de fourniture reçus, qui sont associés à des fournitures de même nature, le signal de coût de fourniture correspondant à la fourniture la plus économique est sélectionné et comparé à la valeur de coût de fourniture prédéterminée.

3. Procédé selon l'une des revendications 1 et 2, caractérisé en ce que le consommateur tient en réserve une fourniture dépendante d'une conduite, à laquelle est associée une valeur de coût de fourniture qui est comparée au signal ou aux signaux de coût de fourniture d'une fourniture de même nature de l'offreur, et qu'en fonction du résultat de la comparaison un raccordement à la conduite pour la fourniture en réserve chez le consommateur est établi, maintenu, interrompu ou maintenu interrompu.

4. Procédé selon l'une des revendications 1 à 3, caractérisé en ce que le signal de coût de fourniture est muni d'une information codée associée à l'un au moins d'un certain nombre de groupes de consommateurs, et que le signal de coût de fourniture n'est comparé à la valeur de coût de fourniture prédéterminée que chez les consommateurs du groupe de consommateurs auquel est associée l'information codée.

5. Procédé selon l'une des revendications 1 à 4, caractérisé en ce que la conduite pour la fourniture correspondante est utilisée comme voie de transmission pour la transmission de signal entre offreur et consommateur.

6. Procédé selon l'une des revendications 1 à 4, caractérisé en ce qu'une voie de transmission indépendante de la conduite pour la fourniture est utilisée pour la transmission de signal entre offreur et consommateur.

7. Procédé selon l'une des revendications 5 et 6, caractérisé en ce que des signaux du consommateur à l'offreur sont transmis sur l'une des voies de transmission.

8. Procédé selon la revendication 7, caractérisé en ce que du côté du consommateur des informations sur la consommation, la quantité et/ou la nature de la fourniture consommée sont préparées et transmises en tant que signaux d'information à l'offreur.

9. Procédé selon la revendication 8, caractérisé en ce que les signaux d'information sont appelés par l'offreur.

10. Procédé selon l'une des revendications 1 à 4, caractérisé en ce que les coûts associés au signal de coût de fourniture instantané sont affichés de façon visible.

11. Procédé selon l'une des revendications 1 à 9, caractérisé en ce que la fourniture est au moins une fourniture du groupe comprenant l'énergie électrique, le chauffage à distance, le gaz combustible, le mazout, l'eau, les eaux usées, les déchets et les produits industriels.

12. Système pour la réduction de pointes de débit pour des fournitures de distribution et/ou d'évacuation dépendantes de conduites, caractérisé par

du côté de l'offreur de la fourniture un dispositif d'émission pour la délivrance de signaux de coût de fourniture indiquant le coût de fourniture instantané,

du côté du consommateur un dispositif de réception (2) pour les signaux de coût de fourniture et un dispositif de commande (3), les signaux de coût de fourniture reçus par le dispositif de réception (2) étant comparés dans le dispositif de commande (3) à une valeur de coût de fourniture prédéterminée et un raccordement à la conduite (1) pour cette fourniture pouvant être établi, maintenu, interrompu ou maintenu interrompu en fonction du résultat de la comparaison.

13. Système selon la revendication 12, caractérisé en ce que le consommateur est raccordé au côté offreur par au moins deux conduites (20,22,24), que le dispositif de commande (26) contient un dispositif logique au moyen duquel, parmi les signaux de coût de fourniture reçus associés à des fournitures de même nature, le signal de coût de fourniture correspondant à la fourniture la plus économique peut être sélectionné et comparé à la valeur de coût de fourniture prédéterminée.

14. Système selon l'une des revendications 12 et 13, caractérisé en ce que chez le consommateur une fourniture dépendante d'une conduite est prévue, à laquelle est associée une valeur de coût de fourniture, que cette valeur de coût de fourniture est comparée dans le dispositif de commande au signal ou aux signaux de coût de fourniture, et qu'en fonction du résultat de la comparaison un raccordement à la conduite de la fourniture prévue chez le consommateur peut être établi, maintenu, interrompu ou maintenu interrompu.

15. Système selon l'une des revendications 12 à 14, caractérisé en ce que le signal de coût de fourniture contient une information codée associée à l'un au moins d'un certain nombre de groupes de consommateurs, que le dispositif de réception comprend un dispositif de vérification dans lequel l'information codée du signal de coût de fourniture est comparée à une information codée prédéterminée, et que le signal de coût de fourniture n'est comparé à la valeur de coût de fourniture que si les deux informations codées coïncident.

16. Système selon l'une des revendications 12 à 15, caractérisé en ce que les signaux de coût de fourniture sont transmis de l'offreur au consommateur par l'intermédiaire de la conduite pour la fourniture correspondante.

17. Système selon l'une des revendications 12 à 15, caractérisé en ce que les signaux de coût de fourniture sont transmis de l'offreur au consommateur par l'intermédiaire d'une voie de transmission indépendante de la conduite pour la fourniture.

18. Système selon l'une des revendications 16 et 17, caractérisé en ce que des signaux sont transmis du consommateur à l'offreur à travers la conduite pour la fourniture correspondante et/ou par l'intermédiaire d'une voie de transmission indépendante de la conduite.

19. Système selon la revendication 18, caractérisé en ce que chez le consommateur des informations sur la consommation, la quantité et/ou la nature de la fourniture consommée peuvent être préparées et transmises à l'offreur en tant que signaux d'information.

20. Système selon la revendication 19, caractérisé en ce que les signaux d'information sont appelés par l'offreur.

21. Système selon l'une des revendications 12 à 15, caractérisé en ce que les coûts associés aux signaux de coût de fourniture peuvent être affichés de façon visible au moyen d'une unité d'affichage et que la valeur de coût de fourniture prédéterminée est introduite par l'intermédiaire d'une unité d'entrée.

22. Système selon l'une des revendications 12 à 20, caractérisé en ce que la fourniture est au moins une fourniture du groupe comprenant l'énergie électrique, le chauffage à distance, le gaz combustible, le mazout, l'eau, les eaux usées, les déchets et les produits industriels.

Fig. 1

Fig. 2